# EUROPEAN PATENT APPLICATION

(11) **EP 3 937 358 A1**
(43) Date of publication of application: **12.01.2022**
(21) Application number: 21167361.1
(22) Date of filing: 08.04.2021
(51) Int. Cl.: H02K 31/02

(54) **BRUSHED DIRECT-CURRENT (DC) MACHINE**

(30) Priority: 10.07.2020 US 202016926290
(71) Applicant: Warren, Daniel, Cincinnati, OH 45240 (US)
(72) Inventor: Warren, Daniel, Cincinnati, OH 45240 (US)
(74) Representative: Zoli, Filippo

(57) **Abstract**

A brushed direct-current (DC) machine is provided. The brushed direct-current (DC) machine comprises a toroidal ring structure having a plurality of sections with an toroidal electromagnet placed in each of the plurality of sections to produce at least one toroidal quadrupole magnetic field, wherein the plurality of sections is coaxially attached to the toroidal ring structure. Further, the brushed direct-current (DC) machine comprises a stator enclosing the armature. Furthermore, the brushed direct-current (DC) machine includes a toroidal brush assembly coupled to the armature, and a positive and a negative terminal of a power source configured to energise the armature.

## Description

### TECHNOLOGICAL FIELD

An example embodiment of the present invention generally relates to electrical machines, and more specifically relates to a brushed Direct-Current (DC) machine.

### BACKGROUND

Electrical machines, such as electric motor and generator, are used in a variety of applications. For example, the electric motors are used in lathe machines, centrifugal pumps, fans, blowers, conveyors, lifts, weaving machine, spinning machines, and the like. Lately, the electric motor is utilized vehicle applications. Specifically, in hybrid vehicle development, the electric motor is a fundamental component of a hybrid power train system. Among other functions, the electric motor may produce a torque. For example, the electric motor may be operated to produce a positive torque for propelling the vehicle in a motoring mode. The electric motor may also be operated to produce a negative torque for energy generation in a generating mode.

However, back-emf due to inductance reduces power, limiting speed of the electric motors. Consequently, actual torque output of the electric motor may not necessarily correspond to a desired or commanded torque. For example, electric Vertical Take-off and Landing (VTOL) aircraft using the electric motor needs to produce higher speeds by generating higher torques per rpm or large power. To generate large power the armature needs to carry large driving currents. However, the large driving currents are limited due to back-emf generated due to inductance. Additionally, as magnitude of the current increases, size of the electric motor increases. Furthermore, the electric motor of large diameter small shaft need reduction gears to maximize useable torque, but still has rpm limits, which becomes a huge drawback when used in aviation applications. The large and power limited electric motors are difficult to utilize for practical applications, for example, in the electric VTOL and super cruise.

### SUMMARY

It is an objective of some embodiments to provide an armature geometry which minimizes back-emf due to inductance. It is also an objective of some embodiments to design an armature that can handle high currents and associated heat, large torque radii, and large tolerances for different bearing types and geometries. Additionally, some embodiments aim to provide hub less electric machine design to allow structured axial flow compression. Additionally or alternatively, it is an objective of some embodiments to reduce size of the electric machine to provide a compact size electric machine and high power across entire spectrum of structurally relevant rpm without need or complexities of reduction gearing and transmissions.

Accordingly, one embodiment discloses a brushed direct-current (DC) machine, comprising an armature comprising a toroidal structure having a plurality of sections with an electromagnet placed in each of the plurality of sections to produce at least one toroidal quadrupole magnetic field, wherein the plurality of sections is coaxially attached to the toroidal structure, and a stator enclosing the armature.

According to some example embodiments, the plurality of sections are configured to form a quadrupole to produce the at least one toroidal quadrupole magnetic field.

According to some example embodiments, the electromagnet placed in each of the plurality of sections is of alternative polarity.

According to some example embodiments, to produce the at least one toroidal quadrupole magnetic field, the armature is configured to quadricept the quadrupole radially and axially.

According to some example embodiments, the brushed DC machine further includes a toroidal brush assembly coupled to the armature, and a positive and a negative terminal of a power source configured to energise the armature.

According to some example embodiments, a toroidal permanent magnet is placed in each of the plurality of sections of the toroidal ring structure to produce the at least one toroidal quadrupole magnetic field.

According to some example embodiments, radial and axial extremities of the armature are electrically connected to a stator.

According to some example embodiments, the armature is energised by the power source to produce an electromotive force (EMF) to minimize back-emf.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

The presently disclosed embodiments will be further explained with reference to the attached drawings. The drawings shown are not necessarily to scale, with emphasis instead generally being placed upon illustrating the principles of the presently disclosed embodiments.
FIG. 1 shows a perspective view of an armature of a brushed direct-current (DC) machine, in accordance with an exemplary embodiment.
FIG. 2 shows the arrangement of permanent magnets in a plurality of sections of the armature, in accordance with an exemplary embodiment.
FIG. 3 shows a cross sectional view of the armature of the brushed DC machine, in accordance with an exemplary embodiment.
FIG. 4 shows a perspective view of a commutator of the brushed DC machine, in accordance with an exemplary embodiment.
FIG. 5A shows an exploded view of the brushed DC machine, in accordance with an exemplary embodiment.
FIG. 5B shows a perspective view of the brushed DC machine, in accordance with an exemplary embodiment.
FIG. 6 shows a cross sectional view of a cross 'X' shape armature of the brushed direct-current (DC) machine, in accordance with an exemplary embodiment.
FIG. 7A shows a perspective view of the cross 'X' shape armature including toroidal permanent magnets, in accordance with an exemplary embodiment.
FIG. 7B shows a cross sectional view of the cross 'X' shape armature including the toroidal permanent magnets, in accordance with an exemplary embodiment.
FIG. 8 shows a perspective view of a commutator for the cross 'X' shape armature, in accordance with an exemplary embodiment.

### DETAILED DESCRIPTION

In the following description, for purposes of explanation, numerous specific details are set forth in order to provide a thorough understanding of the present disclosure. It will be apparent, however, to one skilled in the art that the present disclosure may be practiced without these specific details. In other instances, apparatuses and methods are shown in block diagram form only in order to avoid obscuring the present disclosure.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Some embodiments of the present disclosure will now be described more fully hereinafter with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present disclosure. Further, it is to be understood that the phraseology and terminology employed herein are for the purpose of the description and should not be regarded as limiting. Any heading utilized within this description is for convenience only and has no legal or limiting effect.

As used in this specification and claims, the terms "for example." "For instance." and "such as, and the verbs "comprising," "having." "including." and their other verb forms, when used in conjunction with a listing of one or more components or other items, are each to be construed as open ended, meaning that that the listing is not to be considered as excluding other, additional components or items. The term "based on "means at least partially based. Other terms are to be construed using their broadest reasonable meaning unless they are used in a context that requires a different interpretation.

The following description provides exemplary embodiments only, and is not intended to limit the scope, applicability, or configuration of the disclosure. Rather, the following description of the exemplary embodiments will provide those skilled in the art with an enabling description for implementing one or more exemplary embodiments. Contemplated are various changes that may be made in the function and arrangement of elements without departing from the spirit and scope of the subject matter disclosed as set forth in the appended claims.

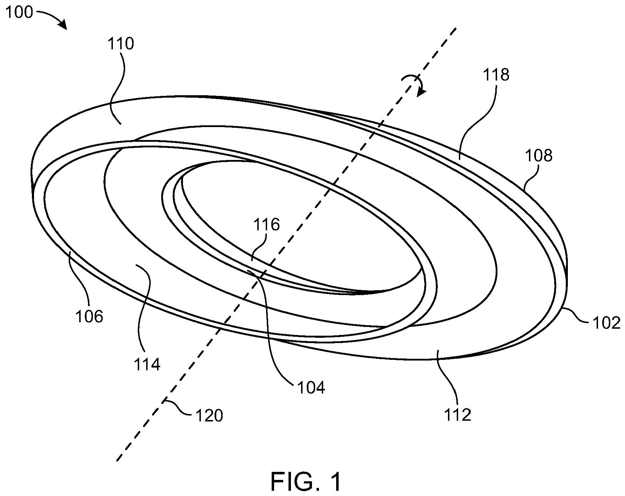

FIG. 1 shows a perspective view of an armature 100 of a brushed direct-current (DC) machine, in accordance with an exemplary embodiment. The armature 100 of the brushed DC machine is a rotating part of the brushed DC machine. In other words, the armature 100 acts as a rotor. The armature 100 is configured to interact with a magnetic field In an embodiment, the magnetic field is generated by permanent magnets. In another embodiment, the magnetic field is generated by electromagnets formed by a conducting coil.

According an embodiment, the brushed DC machine can be used as a generator. If the brushed DC machine is used as a generator, then an electromotive force is produced in the armature due to a relative motion between the armature 100 and a magnetic field. According to another embodiment, the brushed DC machine can be used as a motor. If the brushed DC machine is used as a motor, the armature 100 is excited using a power source to carry an armature current. The armature current interacts with the the magnetic field, resulting a torque which rotates the armature 100. To that end, when the brushed DC machine is used as the motor, electrical energy is converted into mechanical energy. The armature 100 is configured to rotate with respect to an axis of rotation 120, either in clockwise direction or counter clockwise direction.

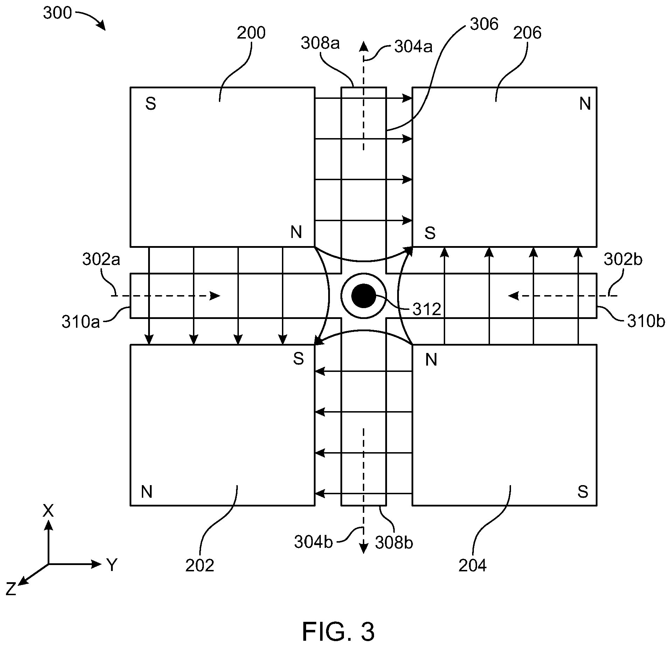

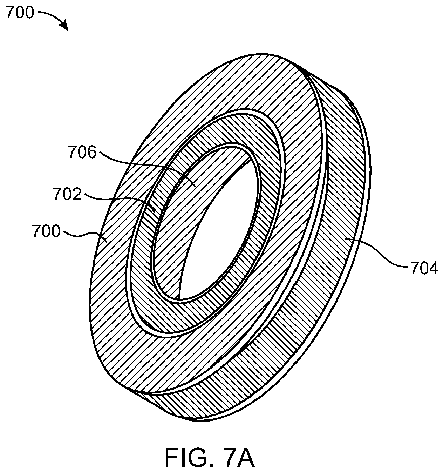

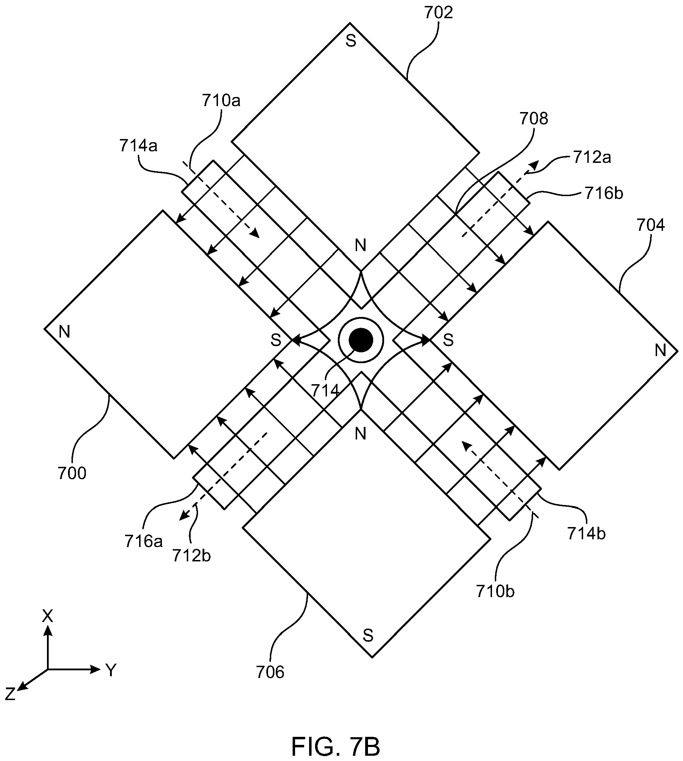

The armature 100 comprises a toroidal structure including a plurality of plates. The toroidal structure corresponds to a toroidal ring structure 110. For example, the toroidal ring structure 110 includes four plates 102, 104, 106, and 108. Each of these plates are attached to each other such that cross-section of the armature 100 resembles plus '+' shape (explained in detail in FIG.3). In an alternate embodiment, the four plates 102, 104, 106, and 108 are arranged such that the cross-section of the armature 100 resembles cross 'X' shape (explained in detail in FIG.7). The plurality of plates is arranged such that a plurality of sections is formed. For example, the four plates 102, 104, 106, and 108 are arranged as shown in FIG.1 to form a plurality of sections 112, 114, 116, and 118. The section 112 corresponds to a toroidal shaped section between the plate 102 and the plate 106. The section 114 corresponds to a toroidal shaped section between the plate 104 and the plate 106. The section 116 corresponds to a toroidal shaped section between the plate 104 and the plate 108. The section 118 corresponds to a toroidal shaped section between the plate 108 and the plate 102. The plurality of sections 112, 114, 116, and 118 are coaxially attached to the toroidal ring structure 110. The plurality of sections 112, 114, 116, and 118 are configured to form a quadrupole to produce at least one toroidal quadrupole magnetic field (as explained in FIG 3).

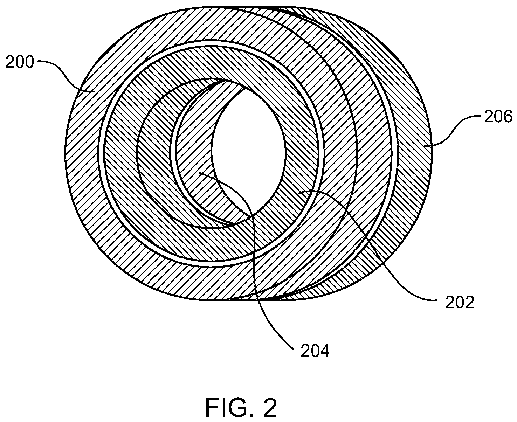

The plurality of sections is configured to accommodate a permanent magnet in each section of the plurality of sections. To that end, the permanent magnet can be placed in each section of the plurality of sections. An exemplary embodiment showing an arrangement of the permanent magnet in each section of the plurality of sections is described in FIG. 2.

FIG. 2 shows the arrangement of the permanent magnets in the plurality of sections of the armature 100, in accordance with an exemplary embodiment. The permanent magnet is arranged in each section of the plurality of sections 112, 114, 116, and 118 coaxially. In particular, a toroidal permanent magnet is placed in each of the aforementioned sections coaxially. For example, a toroidal permanent magnet 200 is placed in the section 112. A toroidal permanent magnet 202 is placed in the section 114. Likewise, toroidal permanent magnets 204 and 206 are placed in the sections 116 and 118, respectively. The permanent magnet placed in each section of the plurality of sections is of alternative polarity. For example, the toroidal permanent magnets 200, 202, 204, and 206 are of alternative polarity. According to an embodiment, the toroidal permanent magnet 200 has magnetic north pole and the toroidal permanent magnet 206 has magnetic south pole. Likewise, the toroidal permanent magnets 202 and 204 have magnetic south pole and magnetic north pole, respectively.

In an alternate embodiment, an electromagnet is placed in each section of the plurality of sections. In particular, a toroidal electromagnet is placed in each of the plurality of sections. For example, like the placement of the toroidal permanent magnets in the sections 112, 114, 116, and 118, the toroidal electromagnet is placed in each of the sections 112, 114, 116, and 118. According to an embodiment, the toroidal electromagnet is placed in each of the plurality of sections coaxially. Further, the toroidal electromagnets placed coaxially in the sections 112, 114, 116, and 118 are of alternative polarity. Each of such toroidal electromagnets is coated with an electrical isolating material. The electrical isolating material corresponds to a thermopolymer, such as, but not limited to, Teflon, Polyvinyl Chloride, Polypropylene, and Polyethylenetheraphtalate. According to an embodiment, each of the permanent magnet placed in the plurality of sections are coated with the electrical isolating material.

FIG. 3 shows a cross sectional view 300 of the armature 100 of the brushed direct-current (DC) machine, in accordance with an exemplary embodiment. The cross sectional view 300 resembles the plus '+' shape configuration formed by the four plates 102, 104, 106, and 108 of the armature 100. According to an embodiment, the aforesaid plates are attached to each other such that angle between adjacent plates is 90° degrees. For example, angle between the plate 102 and 108 is 90° degrees. The toroidal permanent magnets 200, 202, 204, and 206 placed in the respective sections form a quadrupole. The quadrupole is configured to produce a toroidal quadrupole magnetic field. The toroidal quadrupole magnetic field is represented with magnetic field lines 306. The magnetic field lines 306 point from north pole to south pole.

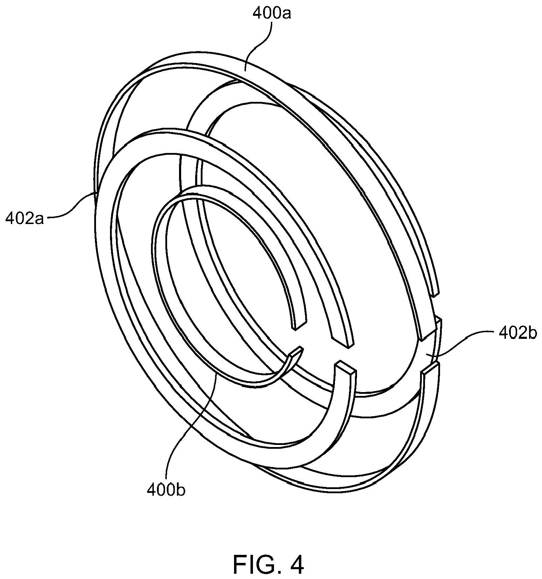

The armature 100 of the brushed DC machine is connected to a commutator. FIG. 4 shows a perspective view of the commutator, in accordance with an exemplary embodiment. FIG. 4 is explained in conjunction with the FIG.3. The commutator includes split rings 400a, 400b, 402a, and 402b. The split rings 400a, 400b, 402a, and 402b are arranged such that they are in contact with the extremities of the armature 100. In particular, the split ring 400a is arranged such that the split ring 400a is in contact with a radial extremity 308a. The split ring 400b is arranged such that the split ring 400b is in contact with a radial extremity 308b. The split rings 402a and 402b are arranged such that they are in contact with axial extremities 310a and 310b, respectively. Further, the split rings are coupled to a toroidal brush assembly (not shown in FIG 3 and 4). The toroidal brush assembly includes toroidal brushes. Each of the split rings 400a, 400b, 402a, and 402b is electrically coupled to respective toroidal brush. In an embodiment, the toroidal brush assembly may comprise a toroidal brush coupled to slip-rings (not shown in Figure). Each of the slip rings is coupled to respective toroidal brush. The slip ring provides current to the armature 100 continuously irrespective of armature angle.

If the brushed DC machine is used as the generator, the commutator is configured to collect high current generated in the armature 100. Further, the current flows through an external load circuit, via the brush assembly.

Alternatively, if the brushed DC machine is used as the motor, then a current is applied to the armature 100 through the brush assembly. In an embodiment, the toroidal brushes connected to the split rings 402a and 402b are connected to positive terminal of the power source. The toroidal brush connected to the split ring 400a and 400b are connected to a negative terminal of the power source. The power source may be a DC source. The power source is configured to energise the armature 100. The armature current enters the armature 100 axially, i.e. simultaneously in axial directions 302a and 302b, in the plates 106 and 108. The armature current exits the armature 100 radially, i.e. simultaneously in radial directions 304a and 304b, from the plates 102 and 104. The current supplied to the armature provides an electromotive force (EMF) of the brushed DC motor. A point 312 pointing towards an observer represents the EMF

To that end, the current and the armature 100 is configured to quadricept the quadrupole radially and axially simultaneously to produce the toroidal quadrupole magnetic field. The current is driven across the toroidal brushes magnetizing the armature 100 in such a way as to be orthogonal to the toroidal quadrupole magnetic field, thus creating the torque as per Fleming's left hand rule. Due to the torque, the armature 100 rotates about the axis of rotation 120 shown in FIG.1, either in the clockwise direction or the counter clockwise direction.

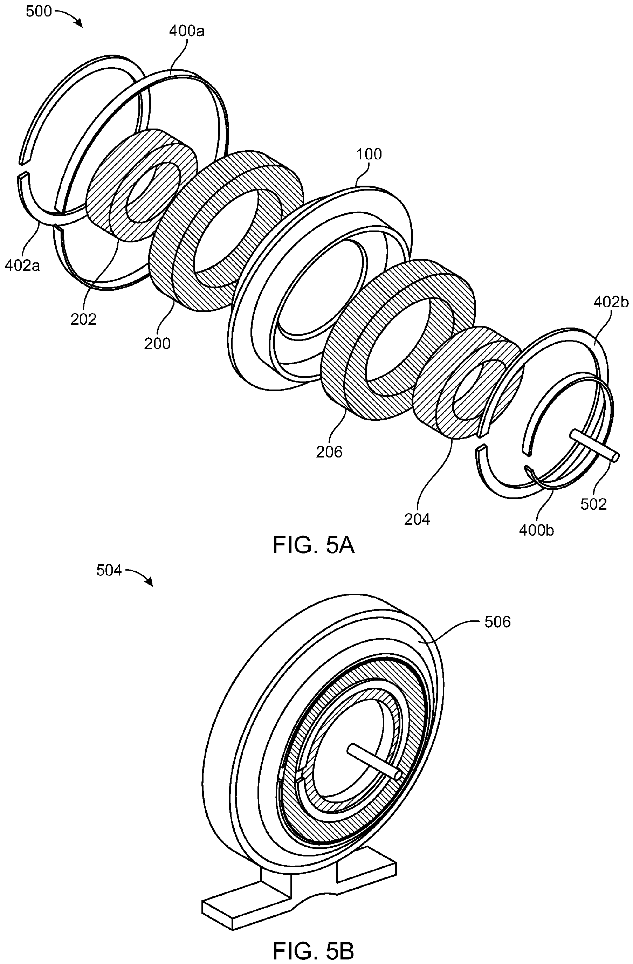

FIG. 5A shows an exploded view 500 of the brushed DC machine, in accordance with an exemplary embodiment. The armature 100, the toroidal permanent magnets 200, 202, 204, and 206, the commutator including the split rings 400a, 400b, 402a, and 402b, and a shaft 502 are assembled to produce the brushed DC machine 504 shown in FIG. 5B. FIG. 5B shows a perspective view of the brushed DC machine 504, in accordance with an exemplary embodiment. FIG. 5A is explained in conjunction with FIG.5B. The armature 100 is rotatably attached to the shaft 502 using bearings. In an embodiment, the shaft 502 is electrically isolated and placed on the armature 100. Further, in an alternate embodiment, the shaft 502 is mechanically coupled to a shaft of a turbine. For example, the shaft 502 and the turbine shaft (not shown in figure) are coupled by rigid coupling, flexible coupling, or fluid coupling.

According to an embodiment, the armature 100 is made up of an electrically conductive metal, such as copper, aluminium, gold or silver. The radial and axial extremities of the armature 100 are electrically connected to a stator. According to an embodiment, an external casing 506 may be used as the stator. The current through the armature 100 within the toroidal quadrupole magnetic field does not need to flip or oscillate to maintain motion. In an alternate embodiment, the armature 100 is energised by the power source to produce the EMF to minimize the back-emf. The armature 100 can handle high currents, torque, and heat. Since the brushed DC machine 504 is a hub less electric machine design, it allows structured axial flow compression. Additionally, the brushed DC machine 500 is a compact size electric machine. Therefore, the brushed DC machine 500 may be used in a hybrid vehicle to drive wheels of the hybrid vehicle. Further, one or more brushed DC machine 500 may be used in autonomous vehicles for propulsion. Alternatively, the brushed DC machine 500 can be used in aviation field. For example, electric planes can utilize the brushed DC machine 500 along with aviation turbines to power the electric planes.

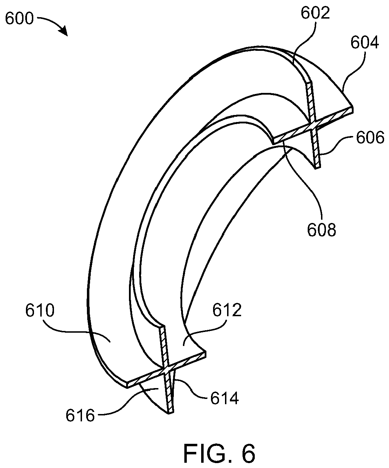

Some embodiments are based on a realization that the armature 100 may have a configuration that resembles the cross 'X' shape. An exemplary embodiment showing an arrangement of the plurality of plates of the armature 100 such that the cross section of the armature resembles the cross 'X' shape is shown in FIG. 6.

FIG. 6 shows a cross sectional view of a cross 'X' shape armature 600 of the brushed direct-current (DC) machine, in accordance with an exemplary embodiment. The cross 'X' shape armature 600 comprises a toroidal ring structure 610 includes a plurality of sections 602, 604, 606, and 608. Each of these plates is attached to each other such that the cross-section of the cross 'X' shape armature 600 resembles cross 'X' shape. The four plates 602, 604, 606, and 608 are arranged as shown in FIG.6 to form four sections 610, 612, 614, and 616. The section 610 corresponds to a section between the plate 602 and the plate 608. The section 612 corresponds to a section between the plate 606 and the plate 608. The section 614 corresponds to a section between the plate 604 and the plate 606. The section 616 corresponds to a section between the plate 602 and the plate 604.

According to an embodiment, the plurality of sections 610, 612, 614, and 616 are configured to accommodate the permanent magnet in each section. The permanent magnet is arranged in each section of the plurality of sections 610, 612, 614, and 616 coaxially. In particular, the toroidal permanent magnet is placed in each of the aforementioned sections coaxially. The toroidal permanent magnet placed in each section of the plurality of sections 611, 612, 614, and 616 is of alternative polarity.

In an alternate embodiment, the electromagnet is placed in each section of the cross 'X' shape armature 600. In particular, the toroidal electromagnet is placed coaxially in each section of the plurality of sections 610, 612, 614, and 616. Further, the toroidal electromagnets placed coaxially in the plurality of sections 610, 612, 614, and 616 are of alternative polarity. Each of such toroidal electromagnets is coated with the electrical isolating material.

FIG. 7A shows a perspective view of the cross 'X' shape armature 600 including toroidal permanent magnets, in accordance with an exemplary embodiment. Toroidal permanent magnets 700, 702, 704, and 706 are placed in the four sections 610, 612, 614, and 616, respectively, to form the quadrupole. The quadrupole is configured to produce the toroidal quadrupole magnetic field.

FIG. 7B shows a cross sectional view of armature 600 including the toroidal permanent magnets, in accordance with an exemplary embodiment. The toroidal permanent magnets 700, 702, 704, and 706 are placed in the four sections 610, 612, 614, and 616, respectively, to form the quadrupole. The quadrupole is configured to produce the toroidal quadrupole magnetic field. The toroidal quadrupole magnetic field is represented with magnetic field lines 708. The magnetic field lines 708 point from the magnetic north pole to the magnetic south pole. The cross 'X' shape armature 600 is connected to the power source to energize the armature 600, via a commutator. The armature 100 of the brushed DC machine is connected to the commutator.

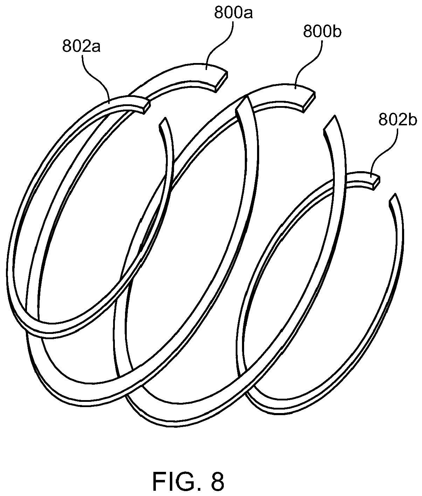

FIG. 8 shows a perspective view of the commutator for the cross 'X' shape armature 600, in accordance with an exemplary embodiment. FIG. 8 is explained in conjunction with the FIG.7B. The commutator includes split rings 800a, 800b, 802a, and 802b. The split rings 800a, 800b, 802a, and 802b are arranged such that they are in contact with the extremities of the armature 600. In particular, the split ring 800a is arranged such that the split ring 800a is in contact with an axial extremity 714a of the armature 600. The split ring 800b is arranged such that the split ring 800b is in contact with an axial extremity 714b. The split rings 802a and 802b are arranged such that they are in contact with radial extremities 716a and 716b, respectively. In an embodiment, the split rings 800a and 800b are connected to positive terminal of the power source. The split rings 802b and 802b are connected to negative terminal of the power source. According to an embodiment, the current from the power source enters the cross 'X' shape armature 600 in directions 710a and 710b, simultaneously. The current exits the cross 'X' shape armature 600 in directions 712a and 712b, simultaneously. The current supplied to the cross 'X' shape armature provides the EMF of the brushed DC motor. A point 714 pointing towards an observer represents the EMF.

To that end, the current and the cross 'X' shape armature 600 is configured to quadricept the quadrupole to produce the toroidal quadrupole magnetic field. The current is driven to magnetize the armature 100 in such a way as to be orthogonal to the toroidal quadrupole magnetic field, thus creating the torque as per the Fleming's left hand rule. Due to the torque, the cross 'X' shape armature 600 rotates, either in the clockwise direction or the counter clockwise direction.

Many modifications and other embodiments of the inventions set forth herein will come to mind of one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A brushed direct-current (DC) machine, comprising:
an armature comprising a toroidal ring structure having a plurality of sections with an toroidal electromagnet placed in each of the plurality of sections to produce at least one toroidal quadrupole magnetic field, wherein the plurality of sections is coaxially attached to the toroidal ring structure; and
a stator enclosing the armature.

2. The brushed DC motor of claim 1, wherein the plurality of sections are configured to form a quadrupole to produce the at least one toroidal quadrupole magnetic field.

3. The brushed DC motor of claim 1, wherein the toroidal electromagnet placed in each of the plurality of sections is of alternative polarity.

4. The brushed DC machine of claim 1, wherein to produce the at least one toroidal quadrupole magnetic field, the armature is configured to quadricept the quadrupole radially and axially.

5. The brushed DC machine of claim 1, further includes a toroidal brush assembly coupled to the armature, and a positive and a negative terminal of a power source configured to energise the armature.

6. The brushed DC machine of claim 1, wherein a toroidal permanent magnet is placed in each of the plurality of sections of the toroidal ring structure to produce the at least one toroidal quadrupole magnetic field.

7. The brushed DC machine of claim 1, wherein radial and axial extremities of the armature are electrically connected to a stator.

8. The brushed DC machine of claim 5, wherein the armature is energised by the power source to produce an electromotive force (EMF) to minimize back-emf.
